# EUROPEAN PATENT APPLICATION

(11) **EP 1 956 576 A1**
(43) Date of publication of application: **13.08.2008**
(21) Application number: 06834155.1
(22) Date of filing: 30.11.2006
(51) Int. Cl.: G09F 3/00, B41J 2/36, B41J 21/16, G06K 7/10

(54) **PEEL-OFF PAPER-ATTACHED LABEL AND LABEL PRINTER**

(30) Priority: 30.11.2005 JP 2005346077; 30.11.2005 JP 2005346078; 30.11.2005 JP 2005346079
(71) Applicant: MAX CO., LTD., Chuo-ku, Tokyo 103-8502 (JP)
(72) Inventor: HORIKOSHI, Naoya, Tokyo; 103-8502 (JP)
(74) Representative: Turner, James Arthur
(86) International application number: PCT/JP2006/324400
(87) International publication number: WO 2007/064035

(57) **Abstract**

One reading sensor is used to read identification mark information, to decide whether a product is genuine.

Identification marks each having sensitivity adjustment for the reading sensor and specific mark information are printed on a sheet of release coated paper. The sensitivity adjustment for the reading sensor is performed by utilizing information on a density acquired by reading the identification mark. By combining pieces of density information on a plurality of marks that constitutes the identification mark, mark information is generated. This mark information is checked against saved mark information. In this case, by utilizing the identification mark in which the plurality of identical marks are sequentially shifted in a traveling direction, even a reading sensor constituted of a single light-emitting element and a single photoreceptor element can acquire the mark information on the identification marks. The read mark information and the mark information contained in barcode information are checked against each other and, if they agree, it is decided that the product is genuine and a result of the decision is displayed.

## Description

### Technical Field

The present invention relates to a release coated paper-attached label and a label printer for printing this label piece.

More specifically, it relates to a release coated paper-attached label and the like in which, by printing on a back side of a sheet of release coated paper a barcode indicating related information of the label piece and a mark indicating information related to a print quality, if using the mark indicating the information related to the print quality as an identification mark, this identification mark can be utilized as genuine product information, and if using the mark indicating the information related to the print quality as a density information mark, this information can be utilized to adjust a sensitivity of a reading sensor.

### Background Art

A printer referred to as a label printer has been actively used in daily duties in all industrial fields for printing labels including labels for a variety of types of products as well as labels for products in a grocery section in a supermarket etc., shipment slips, stocks slips, and parts labels in a product manufacturer.

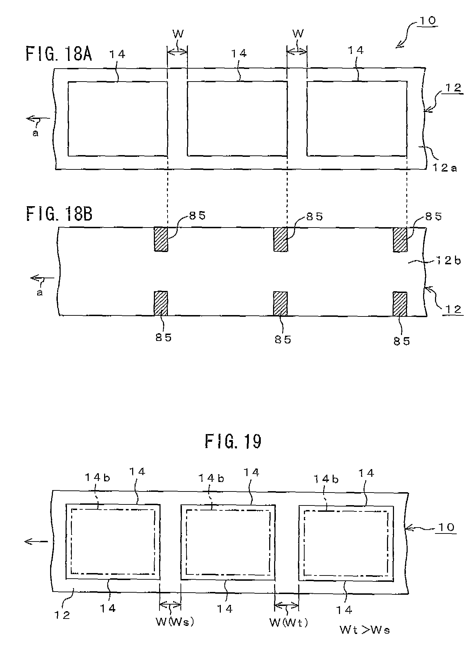

As a label used in such a label printer, a release coated paper-attached label is utilized usually. FIG. 19 shows one example of such a release coated paper-attached label 10, in which a plurality of label pieces 14 are stuck in a row with predetermined spacing (spacing between labels) W (in the example in the figure, Wt>Ws, which originally are identical to each other) on one side, for example, a surface side of a strip-shaped sheet of release coated paper (mount) 12.

The label printer has a merit in that a print layout can be given so as to match a size of a label piece 14 to be used as well as a merit in that if the number of the label pieces of the release coated paper-attached label 10 which is set to a body of the printer is known, the number of printable sheets of paper can be also known beforehand to thereby facilitate designing a print plan, and a merit in that if a type of a form of the label pieces is known, a voltage to be applied to a print head or the like can be adjusted beforehand.

To provide these pieces of printing-out related information to the release coated paper-attached label, a method of utilizing a barcode is the best. By binarizing this printing-out related information into a barcode and printing this barcode on a back side of the release coated paper beforehand, it is possible to read information on the barcode prior to print-start-processing and analyze the read information in order to acquire the above-described various kinds of information, thereby implementing display of a label size, automatic adjustment prior to print processing, and the like.

Also, to print a barcode on a sheet of release coated paper, it is necessary to read barcode information properly. If a reading sensor, by which a barcode is read, has fluctuations in its reading accuracy, the reading accuracy may be affected. Therefore, it is more convenient if a release coated sheet-attached label can be configured so as to get any adjustment function for sensitivity to the reading sensor. To do so, an identification mark for sensitivity adjustment can be printed on a back side of the release coated paper as a mark that indicates information related to a print quality.

Further, it may be thought to print a mark related to a trade name of a provider (a manufacturer or a distribution source) of a release coated paper-attached label on the back side of the release coated paper as an identification mark.

In such a possible case, it may be better from a viewpoint of a printing space and printing costs to share in use an identification mark for sensitivity adjustment and an identification mark for indication of a label provider.

In a case where sharable identification marks are used, as a reading sensor that can read the identification marks as well as a barcode, a reading sensor having a plurality of detection elements (pixels) or a line sensor such as a CCD may be employed so that the identification marks can be read.

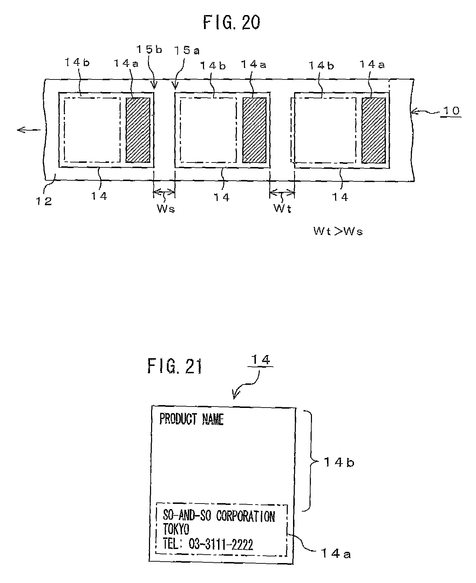

Further, the label pieces 14 are divided into those on which predetermined information is printed partially beforehand as shown in FIG. 20 and those on which nothing is printed as shown in FIG. 19. The predetermined information that has been printed beforehand refers to individual identification information. The individual identification information may include information on a provider (a manufacturer, a distribution source, etc.) of a product such as a corporate name of the provider of the product, an address thereof, a telephone number thereof, as shown in FIG. 21, for example.

The individual identification information is printed on a latter half of the label piece 14 (lower side in a traveling direction (arrow direction)) as shown in FIG. 20. A portion (area) 14b other than such a printed portion (printed area) 14a of this individual identification information all provides an area (character-printing area) 14b in which information can be printed by a label printer (which will be described later). Although print information can be input using an operation key equipped to the label printer, in which case a capacity of information that can be input is limited, the print information is typically created using a terminal apparatus such as a personal computer.

If, for example, a CCD sensor mainly used presently is employed as means for reading a shared-use identification mark as described above, a unit cost due to a licensor himself is expensive, which leads to an increase in costs of the label printer itself. In a possible case where the reading sensor is configured using light-emitting elements and photoreceptor elements, a lot of these elements must be used, which increases the costs inevitably.

Further, if information indicating that a product is genuine can be contained into barcode information, it is possible to, by checking the information against a read mark, accurately decide whether the product is genuine or not and to provide information of this decision to a user. In the case of using a genuine product, a stable and optimal print quality can be obtained.

Thus, the present invention has solved these conventional problems, by which, by printing a barcode indicating information related to a label piece and a mark indicating information related to a print quality on a back side of a sheet of release coated paper, if using the mark indicating the information related to the print quality as an identification mark, this identification mark may be utilized as information on a genuine product, and if using the mark indicating the information related to the print quality as a density information mark, this information may be utilized to adjust a sensitivity to a reading sensor.

### Means for solving the Problems

To solve the above problems, a release coated paper-attached label relative to this invention, which is claimed in claim 1, is characterized in that the label comprises a label piece stuck on one side of a sheet of release coated paper, a barcode which indicates information related to the label piece and which is printed on the other side of the sheet of release coated paper, and a mark which indicates information related to a print quality and which is printed on the same printing side as that prints the barcode.

A label printer relative to this invention, which is claimed in claim 6, is characterized in that the printer comprises a reading sensor for reading a barcode printed on one side of a sheet of release coated paper for a label and a mark which indicates information related to a print quality, and a control section for conducting print control and performing information processing related to the print quality based on information of said barcode and information of said mark which have been read.

According to the present invention, a plurality of label pieces are stuck on a surface side of a sheet of release coated paper with predetermined spacing between them. On its back side, a barcode and a mark that indicates information related to a print quality are printed with predetermined spacing between them. These barcode and mark are formed by printing them at the same density all over the length of the release coated paper so as to provide a reference density.

Information on the barcode is comprised of a variety of kinds of information related to a label and printing, such as a size of the label, a type of form of the label, a maximum number of sheets of paper that can be printed, a printing density, and mark information related to a provider, a manufacturer, a distribution source, and a manufacture date of a release coated paper-attached label.

In a case where a mark printed prior to a barcode is used as an identification mark, first, this mark is printed so as to provide a reference density which is used to adjust sensitivity in a reading sensor. Second, as this identification mark, such a mark as to be constituted of a specific symbol etc. is selected. As such a mark, a mark that is used by the provider of the release coated paper-attached label is appropriate.

The identification mark is composed of a plurality of identical marks. As the identification mark, three through six marks are used so that the identification mark can be decrypted using a reading sensor constituted of a single element. Preferably, four to five marks are used. These marks are arranged in a longitudinal direction of the release coated paper in a condition where they are sequentially shifted with a predetermined gap kept between them. How much these marks are to be shifted depends on a maximum width which the reading sensor can read, a size of the marks, and the number of the marks used.

If the mark indicating the information related to the print quality is used only as a mark that indicates density information, this mark is printed so as to provide a reference density which is used to adjust the sensitivity in the reading sensor. By adjusting the sensitivity in reading, the mark can be read without errors. Therefore, this density information mark also functions as the information related to the print quality.

As the density information mark, besides simple graphics (circle, rectangle, triangle, etc.), a symbol, a character, and a combination thereof (hereinafter referred to as a mark generically) can also be utilized.

The label printer is equipped with a reading sensor that reads a barcode and an identification mark commonly. To suppress costs greatly, the reading sensor is a sensor (of reflection type) that is constituted of a single light-emitting element and a single photoreceptor element.

Barcode information is read and analyzed to acquire the above-described various kinds of information, and based on the information, its contents is then displayed on a display section, if necessary, or its automatic-setting processing is performed.

Furthermore, before the barcode is read, the identification marks etc. are read, so that all the average values of all pieces of information on a mark density from a plurality of the identification marks are used as information on a density of the mark, to be compared to information on a reference density. If the average value is less than that of the information on the reference density, in other words, if a detected output level of the density information is less than a reference level, it is decided that a reading sensitivity of the reading sensor has degraded more or less, so that any sensitivity is adjusted in the reading sensor.

In the label printer, when the mark indicating information related to a print quality is an identification mark and if this identification mark is constituted of a plurality of marks, the marks are read one by one to compose pieces of information on these read marks. The composed mark information is checked against saved mark information. If they agree, the mark information is saved. Further, it is checked against mark information extracted from the barcode information; if they agree, display to the effect that a relevant product is genuine is indicated, and if they disagree, it is appealed to that effect.

If the mark indicating the information related to the print quality is a density information mark, read density information is compared to reference density information. If it is higher than a reference density, that is, if a detected output level of the density information is higher than the reference level, it means that the reading sensitivity of the reading sensor is sufficient, so that it is decided that the barcode information can be read free of errors.

In contrast, if it is lower than the reference density information, in other words, if the detected output level of the density information is less than the reference level, it is decided that the reading sensitivity of the reading sensor is degraded more or less, so that the sensitivity is adjusted in the reading sensor.

The sensitivity is adjusted by performing processing to increase light-emitting output by increasing an excitation voltage for that or processing to amplify an output of the reading sensor. By performing such the sensitivity adjustment, the barcode can be read correctly and the barcode information can also be analyzed correctly.

Further, when ratio information between black and white which are read by as much as a mark width is compared to a reference ratio between black and white, if white dominates black, it means a density is low whereas if black dominates white, it means the density is high, so that it is possible to perform the sensitivity adjustment in accordance with a comparison value.

### Effect of the Invention

The present invention provides a release coated paper-attached label in which a mark indicating information related to a print quality is printed together with a barcode on a sheet of release coated paper. It also provides a label printer that comprises a reading sensor for reading a barcode printed on one side of a sheet of release coated paper for a label and a mark which is utilized as information related to a print quality and a control section for conducting print control and performing information processing related to the print quality based on information of this barcode and information of this mark which have been read.

Accordingly, the present invention has a feature that, by printing an identification mark prior to a barcode, this identification mark can be utilized as mark-checking information.

Further, according to this invention, by configuring an identification mark by sequentially shifting a plurality of identical marks in a traveling direction, even a reading sensor constituted of a single light-emitting element and a single photoreceptor element can acquire mark information on the identification marks, thereby reducing costs of the label printer. The present invention has another feature that, by checking the read mark information and the barcode information against each other, it is possible to certainly decide whether a related product is genuine.

Moreover, if the mark is used as a density information mark, it can be utilized to adjust sensitivity in a reading sensor, so that a barcode can be read without any errors and so can be analyzed correctly.

### Brief Description of the Drawings

FIG. 1 is a system diagram of important components showing one example of a label printer related to the present invention;
FIG. 2 is a side view for showing a layout of a print head and label detection means;
FIG. 3 is a plan view for showing a layout of the print head and the label detection means;
FIG. 4A is a diagram for showing a configuration of a surface side of a release coated paper-attached label related to the present invention;
FIG. 4B is a diagram for showing a configuration of a back side of the release coated paper-attached label shown in FIG. 4A;
FIG. 5 is a configuration diagram for showing one example of a reading sensor;
FIG. 6 is a diagram for showing a configuration of identification marks;
FIG. 7 is a diagram for showing details of the identification mark;
FIG. 8 is a diagram for showing another configuration of the identification marks;
FIG. 9 is a flowchart for showing an example of identification mark processing and barcode information processing;
FIG. 10A is a diagram for showing a configuration of a surface side of the release coated paper-attached label related to the present invention;
FIG. 10B is a diagram for showing a configuration of a back side of the release coated paper-attached label shown in FIG. 10A;
FIG. 17A is a configuration diagram for showing a variant of density information;

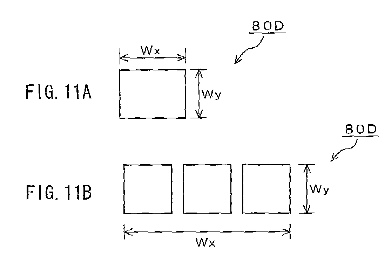

FIG. 11B is a configuration diagram for showing another variant of the density information;

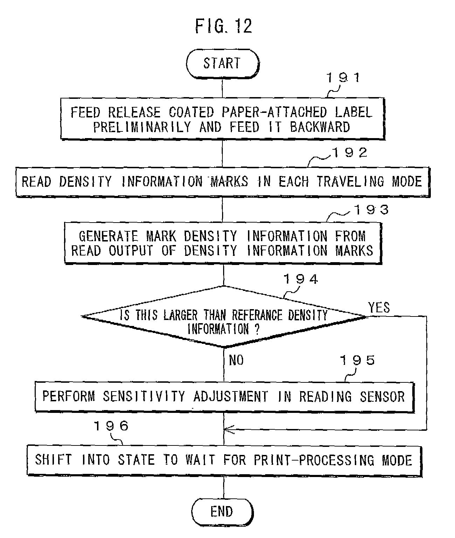

FIG. 12 is a flowchart for showing an example of sensitivity adjustment processing;

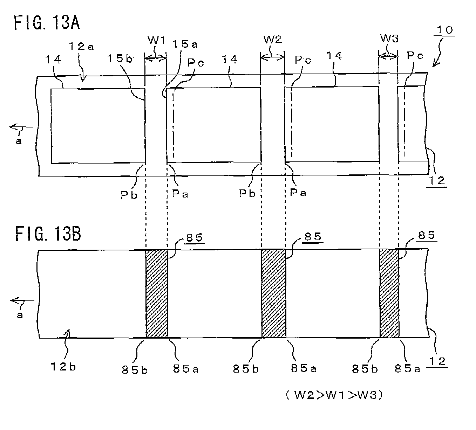

FIG. 13A is a diagram for showing a surface side of another embodiment of the release coated paper-attached label;
FIG. 13B is a diagram for showing a back side of the release coated paper-attached label shown in FIG. 13A;

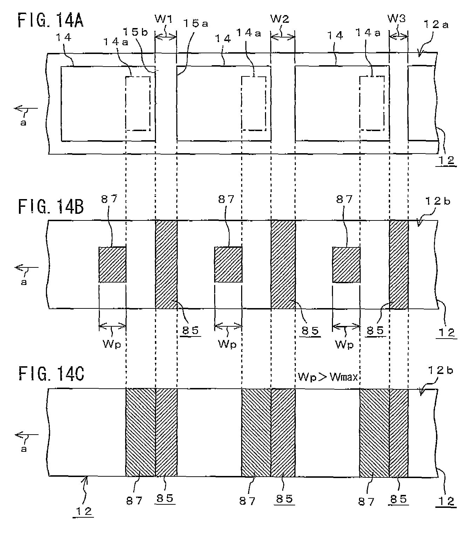

FIG. 14A is a diagram for showing a configuration of a surface side of a release coated paper-attached label related to the present invention;
FIG. 14B is a diagram for showing a back side of the release coated paper-attached label shown in FIG. 14A;
FIG. 14C is a diagram for showing a back side of another example of the release coated paper-attached label shown in FIG. 14B;

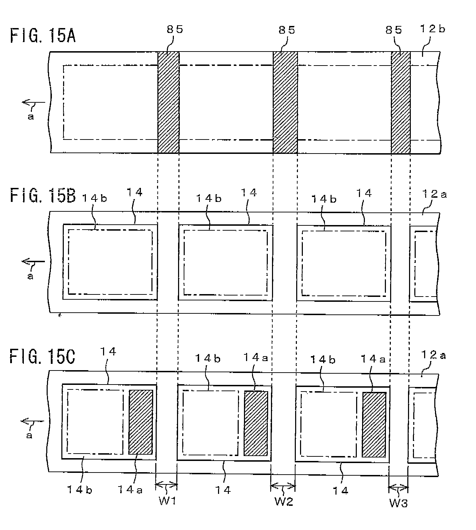

FIG. 15A is a diagram for showing a relationship between a character-printing area and a reference mark and a relationship between the printed area and a reference mark;
FIG. 15B is a diagram for showing the relationship of the character-printing area;
FIG. 15C is a diagram for showing another example of the character-printing area;

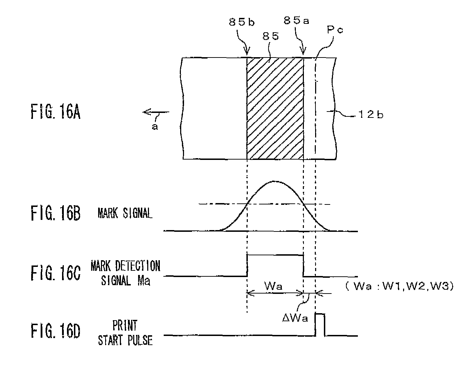

FIG. 16A is a timing chart for showing an example of print start processing by use of a reference mark;
FIG. 16B is a timing chart of a mark signal for showing the example of print start processing by use of the reference mark;
FIG. 16C is a timing chart of a mark detection signal for showing the example of print start processing by use of the reference mark;
FIG. 16D is a timing chart of a print start pulse for showing the example of print start processing by use of the reference mark;

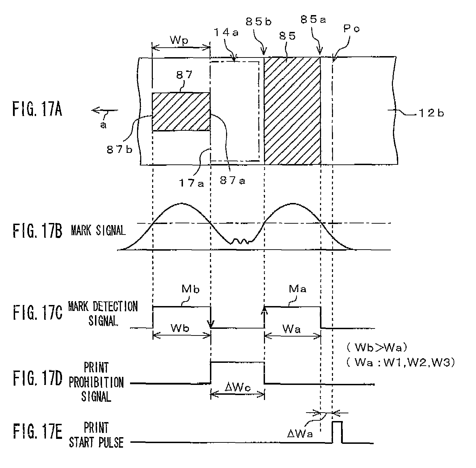

FIG. 17A is a timing chart for showing an example of print prohibiting processing and print start processing that use a print prohibition mark and the reference mark;
FIG. 17B is a timing chart of a mark signal for showing the example of the print prohibiting processing and the print start processing that use the print prohibition mark and the reference mark;
FIG. 17C is a timing chart of a mark detection signal for showing the example of the print prohibiting processing and the print start processing that use the print prohibition mark and the reference mark;
FIG. 17D is a timing chart of a print prohibition signal for showing the example of the print prohibiting processing and the print start processing that use the print prohibition mark and the reference mark;
FIG. 17E is a timing chart of a print start pulse for showing the example of the print prohibiting processing and the print start processing that use the print prohibition mark and the reference mark;
FIG. 18A is a diagram for showing a surface side of an embodiment of the release coated paper-attached label;
FIG. 18B is a diagram for showing a back side of the release coated paper-attached label of FIG. 18A;
FIG. 19 is a diagram for showing label pieces and a relationship between the label pieces and their printed areas;
FIG. 20 is a diagram for showing another embodiment of the label pieces and a relationship between character-printing areas and printed areas; and
FIG. 21 is a diagram for showing printed contents in the printed area.

### Best Mode for Carrying out the Invention

The following will describe in detail embodiments of a release coated paper-attached label and a label printer which are related to the present invention, with reference to drawings.

### (First Embodiment)

The first embodiment relates to an embodiment of a release coated paper-attached label in which a mark that indicates information related to a print quality is used as an identification mark and a label printer used therein.

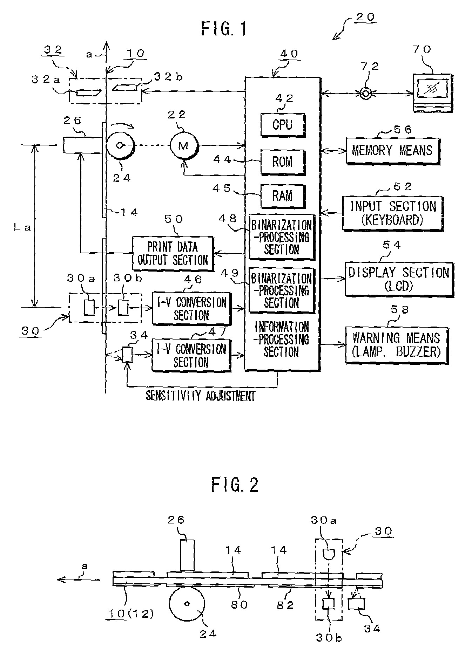

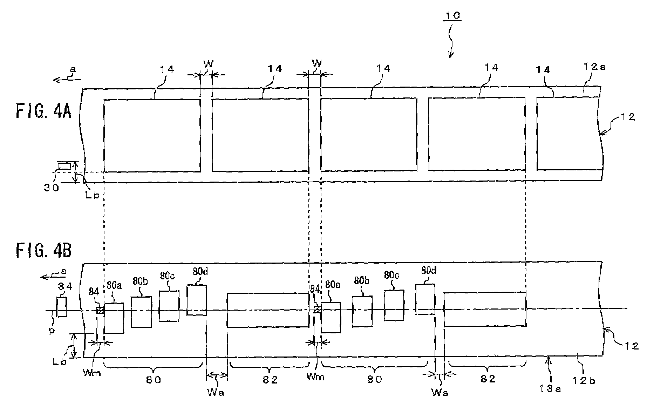

FIG. 1 is a system diagram of important components of a label printer 20 related to the present invention. FIGS. 4A and 4B show one example of important portions of a release coated paper-attached label 10 related to the present invention. First, the release coated paper-attached label 10 will be described with reference to FIGS. 4A and 4B.

The release coated paper-attached label 10 is constituted of a sheet of release coated paper 12 and a plurality of label pieces 14 which are stuck on one side, in this example, a surface side 12a of the sheet thereof. The sheet of release coated paper 12 is a strip-shaped mount, as which a translucent film is used in this example.

Each of the label pieces 14 is made of heat sensitive paper, and several types of the heat sensitive paper having different qualities are available. Those include high-quality heat sensitive paper, glossy heat sensitive paper, and heat-transfer art paper. These label pieces 14 on which a double-faced adhesive is applied are stuck on the sheet of release coated paper 12. The label pieces 14 are created by punching. Therefore, the label pieces 14 are arranged in a longitudinal direction ("a" direction) of the sheet of release coated paper 12 with constant spacing W between them.

At an almost centerline of the other side (back side) 12b of the sheet of release coated paper 12, as shown in FIG. 4B, barcodes 82 are printed in the longitudinal direction "a" of the sheet of release coated paper 12 with predetermined spacing between them. As the barcode 82, in this example, a one-dimensional barcode is used on which rod-shaped marks are arranged. To read information in each of the barcodes 82 more accurately, preferably spacing between the rod-shaped marks in the barcode 82 is kept large to some extent in printing.

Each of the barcodes 82 contains various kinds of pieces of binarized information. These various kinds of pieces of information are referred to information, in one example, on a size of each of the label pieces, a type of a form of the label, the number of the labels, and a printing density as well as information on a provider (manufacturer, distribution source, etc.) of the release coated paper-attached label 10, which includes at least mark information used by the provider. Besides, the information may possibly include a manufacturer, a distribution source, and a manufacture date of the label.

In this example, from a leading end (starting end) to a trailing end (terminating end) of the sheet of release coated paper 12, a lot of barcodes 82 indicating the same contents are printed repeatedly. It is also possible to print them intermittently and, in some cases, print a barcode by as much as a predetermined length from the starting end of the sheet of release coated paper 12.

Further, at a position preceding each of the barcodes 82, as a mark that indicates information related to a print quality, an identification mark 80 is printed with a predetermined gap, in this example, a gap Wa. The identification mark 80 is used not only as a mark so that an existence of the barcode 82 may be recognized beforehand but also as a mark for sensitivity adjustment in a reading sensor 34 (which will be described later) and further as mark information on a label provider.

Therefore, it is supposed that the printing density of each of the barcodes 82 and the printing density of each of the identification marks 80 have been adjusted to have the same density level (reference density level). This is because it is necessary to adjust the sensitivity of the reading sensor 34 based on density information of the identification marks 80. Therefore, each of the identification marks 80 functions also as a density information mark. Each of the identification marks 80 can be utilized also as mark information on a label provider as described later.

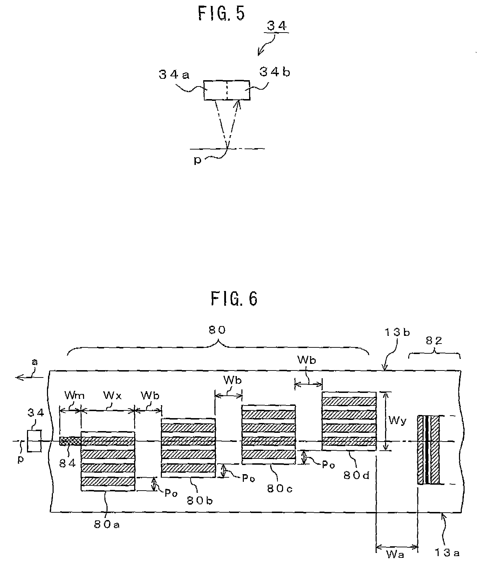

In order to use the reading sensor 34 constituted of a single light-emitting element 34a and a single photoreceptor element 34b as shown in FIG. 5, each of the identification marks 80 is constituted of a plurality of identical marks 80i (i= a through d). The marks 80i of three to six are used. Preferably, they are used as any as four or five.

FIG. 4B shows a case where the identification mark 80 is configured using the four identical marks. Those four marks 80a through 80d are formed by printing them as sequentially shifting them in a width direction of the sheet of release coated paper 12 in a condition where a predetermined gap is kept between them in the longitudinal direction (traveling direction) "a" of the sheet of release coated paper 12.

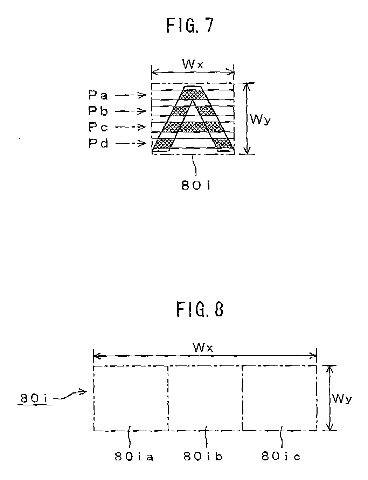

The following will describe it in more detail with reference to FIG. 6. In a case where four marks 80a-80d constitute the identification mark 80, the reading sensor 34, which is comprised of single elements, cannot read all of information of the marks. There is no other ways but to acquire the information of the marks intermittently as sequentially shifting them by a predetermined pitch Po. Accordingly, as shown in FIG. 7, a mark (roman capital character etc.) that constitutes the identification mark 80 is printed so that a vertical direction of the mark agrees with a direction orthogonal to the traveling direction "a".

A width Wy of the mark 80i is divided into four equal sub-widths, which sub-width is selected as a shift pitch in mark printing. Since equally-dividing-by-four may be thought to be too rough depending on a mark size (Wx, Wy), the mark size is selected taking into account both a maximum width that can be read by the reading sensor 34 and the maximum number of the marks 80i to be used. This is because if the shift pitch is too rough, a small number of marks cannot be read and so cannot be reproduced.

If a printing position of the leading identification mark 80a is set to a left end 13a of the sheet of release coated paper 12 with respect to the traveling direction "a" as shown in FIG. 6, it is formed by printing it in a condition where the other identification marks 80b-80d are arranged toward a right end 13b in the traveling direction "a" with them being shifted by the predetermined pitch Po with a predetermined gap Wb between them.

Then, a position of the reading sensor 34 and a traveling position of the release coated paper-attached label 10 are set so that a reading point "p" of the reading sensor 34 may be put on a first one-fourth divided area of the leading mark 80a. Preceding the leading mark 80a, a reference marker 84 having a predetermined width Wm is printed which is used to combine pieces of mark information.

As a result, in a case where the mark information is the roman character "A" as shown in FIG. 7, the reading sensor 34 scans the leading mark 80a at a scanning position (scanning line) Pa, so that a top portion of this roman character is read (hatched portion in the figure). In the case of the second mark 80b, a one-pitch Po lower portion of the roman character is read (scanning line Pb), and in the case of the last mark 80d, information of a fourth-pitch Po portion of the roman character is read (scanning line Pd).

However, the four marks 80a through 80d are read at different timings, so that pieces of information on the read marks are sequentially saved and, finally, combined. By assuming a position measured to be distant by a predetermined length Wm from a leading end of the reference marker 84 to be the leading end of the leading mark 80a, these pieces of information are combined in condition where the leading ends of the marks 80b-80d are all aligned to this assumed leading end.

The leading end of the leading mark 80a can be recognized by measuring the predetermined length Wm by means of counting steps of a later-described stepping motor used to drive a sheet of release coated paper. This holds true also with the other marks 80b-80d.

Accordingly, such mark information as shown in FIG. 7 is obtained. Taking into account a case where this mark information alone is not enough to accurately recognize the roman character "A", similar mark information (saved mark information), which is related to the roman character "A", is stored in memory means 56 (which will be described later) built into a body of the printer. Therefore, by checking the combined mark information and the saved mark information against each other, the corresponding mark can be determined certainly.

The mark 80i is constituted of a single roman character shown in FIG. 7 or the like in rare cases and, in many cases, constituted of at least three roman characters etc. If three characters constitute a mark, three consecutive mark areas 80ia through 80ic, as shown in FIG. 8, constitute one mark 80i, thereby constituting the identification mark 80 by arranging the marks 80i as those shown in FIG. 6.

The identification mark 80 has the predetermined size (Wx, Wy) and a single density as described above and, in an example of FIG. 4B, is printed using black ink having the same density as that of the barcode 82 in such a manner as to give a reference density in a condition where it is aligned with a leading end of the label piece 14. Further, in this embodiment, the identification mark 80 and the barcode 82 are printed so that they may be contained in a length of the two label pieces 14, which length is arbitrary.

The mark to be used is not limited to a roman character as in the case of FIG. 7 but the mark that is easy to be identified is used.

Detection means 30 for detecting the label pieces 14 is set to a position that faces the label piece 14 but not the identification mark 80, as shown in FIGS. 4A and 4B, hence a position that is within a distance Lb between a lower edge of the leading mark 80a of the identification mark 80 and the left end 13a of the sheet of release coated paper 12 with respect to the traveling direction "a" and that does not face the leading mark 80a.

By using the release coated paper-attached label 10 thus configured, predetermined information is printed.

FIG. 1 is a system diagram for showing important components of one example of the label printer 20 related to the present invention, which has a function to adjust the sensitivity of the reading sensor and a function to discriminate the marks.

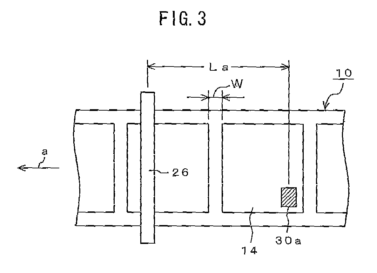

In FIG. 1, a platen roller 24 is driven by a motor, which is a stepping motor 22 in this example, so that any traveling force is applied to the release coated paper-attached label 10 pressed to this platen roller 24 at a predetermined speed in the predetermined direction "a" as shown in FIGS. 2 and 3 also. The release coated paper-attached label 10 is serially fed by the stepping motor 22 in steps of one pitch.

To the platen roller 24, a print head (line-shaped thermal head) 26 is pressed via the release coated paper-attached label 10, in which by supplying the print head 26 with print information, the print information is printed on the label pieces 14.

At a position preceding the print head 26 by a predetermined spacing La, the detection means 30 for detecting the label pieces 14 is arranged. As the label detection means 30, any detection means of transparent type is used. Therefore, as shown in the figure, the detection means 30 for detecting the label pieces 14 is configured by arranging a light-emitting element (light-emitting diode etc.) 30a on one side and a photoreceptor element (photoreceptor diode) 30b on the other side thereof in a condition where they sandwich the release coated paper-attached label 10. Where the label pieces 14 are stuck is detected from a difference in transmission factor.

At a position that is close to the detection means 30 and precedes the detection means 30, the reading sensor 34 is arranged. The reading sensor 34 is arranged to a position distant by a predetermined gap from the sheet of release coated paper 12 on its back side 12b. As the reading sensor 34, a sensor of reflection type is used. As shown in FIG. 5, this sensor has a single-element configuration that the light-emitting element 34a and the photoreceptor element 34b are contained in the same chassis, to read barcode information etc. based on a difference in reflection factor.

Since the barcode 82 etc. are printed on the back side 12b of the release coated paper-attached label 12, as shown in FIG. 4B, the reading sensor 34 is arranged to a position (near a midsection) where it can sense roughly a central line of each of the barcodes 82. In contrast, as shown in FIG. 4A, the detection means 30 (30a, 30b) does not sense the barcodes 82 but is arranged to a position where it can sense only the label pieces 14. For example, it is arranged near a lower end of each of the label pieces 14.

In the label printer 20, on the side of its exit on the downstream side of the print head 26, cutter means 32 is arranged which cuts the release coated, paper-attached label 10, more specifically, the sheet of release coated paper 12. The cutter means 32 is comprised of an upper blade 32a and a lower blade 32b in such a manner as to sandwich the release coated paper-attached label 10, thereby cutting the sheet of release coated paper 12 by moving either one or both of the upper blade 32a and the lower blade 32b vertically.

A series of print processing is performed on the above-described release coated paper-attached label 10 under the control of an information processing section 40, which functions as a control section. The information processing section 40, in which a computer is used, includes mainly a CPU 42 for conducting overall control on the label printer 20 and other components such as memory means (ROM) 44 in which a control program necessary for print processing is stored and working memory means (RAM) 45. Prior to the above-described print processing, in this information processing section 40, the identification mark 80 and the barcode 82 are read.

Further, a sensor output obtained by the photoreceptor element 30b is supplied to an I-V conversion section 46 wherein current-to-voltage conversion is performed and then any binarization-processing and encode processing are performed at a binarization-processing section 48 equipped in the information-processing section 40. Similarly, an I-V conversion section 47 is also provided to convert a sensor output obtained by the reading sensor 34, which output is binarized by a binarization-processing section 49 equipped in the information-processing section 40.

Print data generated by the information-processing section 40 is supplied via a print data output section 50 to the print head 26. At the print data output section 50, the sensitivity adjustment is carried out on the basis of information obtained by analyzing the above-described barcode information.

In synchronization with the supply of the print data, the information-processing section 40 generates a drive signal (line drive signal) for the stepping motor 22, so that the platen roller 24 can be rotationally driven to print in steps of one line in synchronization with the drive signal. The information-processing section 40 generates also a cutter-processing signal for the release coated paper-attached label 10, detailed description of which signal will be omitted.

The information-processing section 40 is associated with an input section (keyboard) 52 for entering the print data etc., a display section (LCD etc.) 54 for displaying the input print data, memory means 56 for storing the input print data etc., and warning means 58 such as a lamp or a buzzer which is used upon occurrence of label-out etc.

As the memory means 56, removable memory means that is attachable/detachable can be utilized such as a flash memory or a card-shaped memory device. In the memory means 56, the above-mentioned saved mark information, the reference density information and the like are stored. In this example, the information-processing section 40 is further equipped with a USB terminal 72 to transmit information to and receive it from a terminal device 70 which creates print information.

In such a manner, the information-processing section 40 constituted of the CPU performs any binarization processing, any processing to detect an end face of each of the label pieces 14, any processing to control label traveling, and any print control processing on the label.

Prior to transition into a print processing mode, information on the identification marks 80 and that of the barcodes 82 are read. For this purpose, when the release coated paper-attached label 10 is set into the printer body, automatically a prior-processing mode (print-preparation-processing mode) is performed.

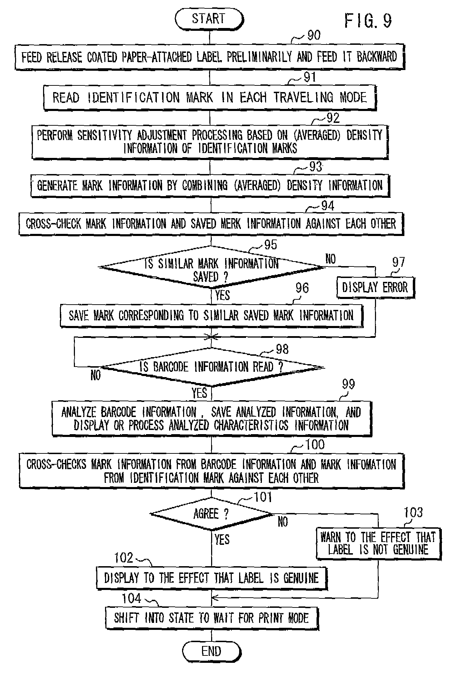

An example of this prior-processing will be described with reference to FIG. 9.

First, the barcodes 82 and the identification marks 80 are read with the release coated paper-attached label 10 being preliminarily fed by as much as a predetermined length (at steps 90 and 91). The predetermined length refers to a length over which about two barcodes 82 can be read. When it is fed by the predetermined length, it is fed backward automatically to its original position.

During the preliminary feeding and the backward feeding, that is, in these traveling modes, the density information is read and sensitivity processing is carried out based on the read density information (at step 92).

The following will describe one example of this sensitivity processing. First, pieces of the read sensitivity information are averaged. The averaged density information is used as mark density information and compared to the density information stored in the memory means 56. If the mark density information is higher than the density information, that is, if a density level (detected density level) of the read density information is higher than a reference density level, it is decided that a reading sensitivity of the reading sensor 34 is sufficient, in which case any sensitivity of the reading sensor 34 is not adjusted.

On the other hand, if the density level of the read density information is lower than the reference density level, it can be decided that the reading sensitivity of the reading sensor 34 is insufficient, in which case the sensitivity of the reading sensor 34 is adjusted.

There are two possible cases where sensitivity adjustment is performed on the reading sensor 34 directly and indirectly. In the former case, a voltage applied to the reading sensor 34 is increased to increase a light-emitting output. By doing so, an increased quantity of light reflected by the sheet of release coated paper 12 enables the density detection level to be gathered. In the latter case, it is thought to amplify the density detection level to a predetermined value. This is because that the density detection level can be increased through the amplification.

By automatically performing such sensitivity adjustment processing, it is possible to perform the subsequent processing of reading the barcodes 82 beforehand without errors. When such sensitivity adjustment processing is finished, the process shifts into a state to wait for the print-processing mode, thereby terminating the sensitivity adjustment processing.

Next, the density information obtained by scanning a plurality of marks 80i that constitute the identification mark is combined onto this identification mark to provide such mark information as shown in FIG. 7 (at step 93). Next, this mark information is checked against saved mark information (at step 94). In this checking, it checks whether or not the saved mark information similar to the mark information exists one by one sequentially and, if any similar saved mark information is found, a mark (roman character) represented by this similar saved mark information is saved as a coincidence mark (at steps 95 and 96). If no similar saved mark information is found, an error is displayed (at step 97).

Next, the reading state of the barcodes 82 is checked (at step 98) and the read barcode information is analyzed, to display and automatically set necessary items out of the analyzed information (at step 99).

Furthermore, the mark information related to a provider among the barcode information and the mark information read from the identification mark 80 are checked against each other and, if any of them agrees with each other, any display of the effect that the release coated paper-attached label 10 set into the printer body is genuine is performed (at steps 100, 101, and 102).

On the other hand, if the mark information based on the barcode information and the mark information from the identification mark 80 do not agree, any warning display to the effect that the set release coated paper-attached label 10 is not genuine is performed (at step 103). This is because a print accuracy (print quality) for the label pieces 14 cannot be guaranteed. It is done so because of a possibility of fluctuations occurring in print accuracy owing to a fact that a paper quality of the label piece 14 differs from that of a genuine one. Warning display processing comes in such a message as "Not a genuine label may be in use". In this case, the warning display is given in place of the above-described error display.

When genuine product display processing or warning display processing is finished, the process waits for the printing mode, to terminate the processing mode to read barcodes etc. (at Step 104).

### (Second Embodiment)

Although the above-described mark 80 that indicates information related to the print quality has also been used as a density information mark, it can be configured as follows in order to be provided with only functions of the density information mark. The following exemplifies a case where the present invention is applied to a release coated paper-attached label 10 having a different mode from that shown in FIGS. 4A and 4B, in which individual information is printed beforehand in part of each of the label pieces 14 stuck on one side (surface side) of the sheet of release coated paper 12.

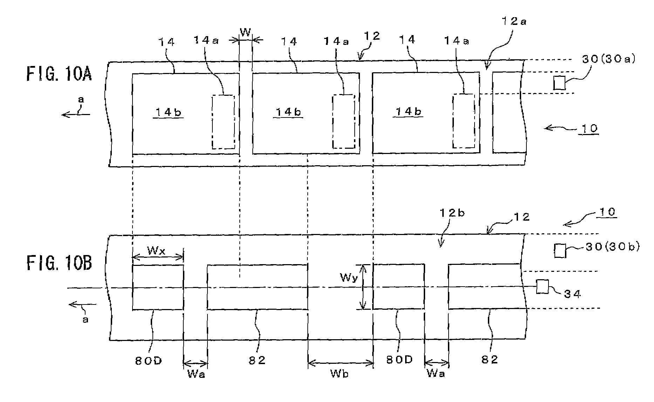

In the case of FIG. 10A, a predetermined lower area of each of the label pieces 14 with respect to a label traveling direction "a" is configured as to be formed as a printed area 14a. In this printed area 14a, predetermined information is printed. This predetermined information printed beforehand refers to individual identification information. The individual identification information may include information of a provider (manufacturer, distribution source, etc.) of a product such as a corporate name, an address, and a telephone number of the product provider.

An area 14b other than the printed area 14a is configured as to be formed as a character-printing area. In the character-printing area 14b, information (character information) related to a packed product is printed such as a product name of the packed product, its material name, a use-by date.

On the other hand, at an almost centerline of the other side (back side) of the sheet of release coated paper 12, as shown in FIG. 10B, barcodes 82 are printed along the longitudinal direction "a" of the sheet of release coated paper 12 with predetermined spacing between them. As the barcodes 82, a one-dimensional barcode or two-dimensional barcode may be considered in which rod-shaped marks are arranged. If a quantity of information is small, a one-dimensional barcode is enough; the present embodiment is of the latter case. To read the barcodes 82 more accurately, preferably spacing between the rod-shaped marks in the barcode 82 is kept large to some extent.

The barcode 82 contains various kinds of pieces of binarized information. These various kinds of pieces of information includes, in one example, a size of the label piece, a type of a form of the label, the number of the label pieces, and information (position information) indicating a printed position (printed area 14a) on the label piece 14.

In this example, from a leading end (starting end) to a trailing end (terminating end) of the sheet of release coated paper 12, a lot of barcodes 82 indicating the same contents are printed repeatedly. It is also possible to print them intermittently and, in some cases, print a barcode by as much as a predetermined length from the starting end of the sheet of release coated paper 12.

Further, at a position preceding each of the barcodes 82, as mark 80 indicating information related to a print quality, density information marks 80D are printed with a predetermined gap, in this example, a gap Wa between them. The density information mark 80D is used not only as a mark for recognizing an existence of the barcode 82 beforehand but also as a mark for adjusting sensitivity of a reading sensor 34. It is here supposed that the printing density of the barcodes 82 and the printing density of the density information mark 80D are adjusted to have the same density level (reference density level).

The density information mark 80D has a predetermined size (Wx, Wy) and a single density and, in an example of FIG. 10B, is printed using black ink having the same density as that of the barcode 82 in such a manner as to give a reference density in a condition where it is aligned with a leading end of each of the label pieces 14. Further, in this example, the density information mark 80D and the barcode 82 are printed so that they may be contained in a length of the two label pieces 14, which length is arbitrary.

As the density information mark 80D, a specific figure, character, or symbol can be used. A configuration of the density information mark 80D will be described with reference to FIGS. 11A and 11B. FIG. 11A shows a case where the density information mark 80D is configured by only a single square figure and FIG. 11B shows a case where it is configured by three same-shaped square figures arranged side by side. By arranging the same-shaped figures side by side, when, for example, three figures are scanned, three pieces of density information can be obtained continually, so that these average values can be used as the density information thereof to thereby acquire the density information more accurately.

The density information mark 80D is not limited to such figures as shown in FIGS. 11A and 11B. Besides the figures, such a mark as a symbol or a character (roman character etc.) may possibly be used. However, in any case, the marks must have a single reference density.

A release coated paper-attached label 10 having such a configuration is used to print predetermined information. Although the same label printer as the label printer 20 shown in FIG. 1 is used in the present embodiment, a configuration and a print processing example of which are omitted; the barcode 82 etc. are printed on the back side 12b of the release coated paper-attached label 12, so that a reading sensor 34 is arranged to a position (near a midsection) where it can sense a roughly central line of the barcode 82 as shown in FIG. 10B.

In contrast, detection means 30 (30a, 30b) is arranged a position where it does not sense the barcode 82 and the printed area 14a but sense only the label pieces 14. For example, it can also be arranged near a right end of each of the label pieces 14 with respect to a traveling direction "a", as shown in FIG. 10A. Therefore, the printed area 14a is provided somewhat leftward.

Prior to the above-described print processing, an information-processing section (data-processing section) 40 that functions as the control section shown in FIG. 1 reads the barcodes 82 and performs sensitivity adjustment processing in the reading sensor 34 based on the density information marks 80D. Therefore, when the release coated paper-attached label 10 is set into a printer body, automatically a prior-processing mode (print-preparation-processing mode) is performed.

The following describe an example of this prior-processing with reference to FIG. 12.

First, the barcodes 82 and the density information marks 80D are read with the release coated paper-attached label 10 being preliminarily fed by as much as a predetermined length (step 191). The predetermined length refers to a length over which about two barcodes 82 can be read. When it is fed by the predetermined length, it is fed backward automatically to its original position. It is to be noted that what is related to the present invention directly is density-information-reading processing, so that specific processing to read barcode information will be omitted.

During the preliminary feeding and the backward feeding, that is, in each traveling mode, the density information is read (step 192) and then, the read density information is binarized and generated as encoded mark density information (step 193).

Next, the binarized mark density information is compared with the density information stored beforehand in a memory means 56 and if the read mark density information is larger than reference density information, namely, if a density level (detected density level) of the read mark density information is higher than a reference density level, it is decided that the reading sensitivity of the reading sensor 34 is sufficient, in which case the sensitivity adjustment in the reading sensor 34 is not performed (step 194).

On the other hand, if the density level of the read density information is lower than the reference density level, it is decided that the reading sensitivity of the reading sensor 34 is insufficient, in which case the sensitivity adjustment in the reading sensor 34 is performed (steps 194 and 195).

There are possible cases where sensitivity adjustment is performed on the reading sensor 34 directly and indirectly.

In the former case, a voltage applied to the reading sensor 34 is increased to increase a light-emitting output. By doing so, an increased quantity of light reflected by the sheet of release coated paper 12 enables the detected density level to be gathered. In the latter case, it is thought to amplify the detected density level to a predetermined value. This is because that the density detection level can be increased through the amplification.

It is to be noted that when comparing ratio information between black and white which are read by as much as a mark width to a reference ratio between black and white, if white dominates black, it means the density is low whereas if black dominates white, it means the density is high, so that it is possible to perform the sensitivity adjustment in accordance with a comparison value.

By automatically performing such sensitivity adjustment processing, it is possible to perform the subsequent processing of reading the barcodes 82 beforehand without errors. When such sensitivity adjustment processing is finished, the process shifts into a state to wait for the print-processing mode (step 196), thereby terminating the sensitivity adjustment processing.

### (Third Embodiment)

The above-described label pieces 14 are divided into virginal label pieces each having no printed area and label pieces each having a printed area 14a partially. In either type, it is necessary to print character in a predetermined area of each of the label pieces 14. One example to accurately perform this print processing will be described with reference to FIGS. 13A and 13B.

First, as shown in FIG. 13A, the label pieces 14 are produced by die-cutting them. Therefore, the label pieces 14 are arranged in a longitudinal direction of a sheet of release coated paper 12 with constant spacing W (W1, W2, W3, etc.) between them. Actually, the spacing fluctuates to some extent, so that W1, W2, and W3 are not equal to each other in many cases. In some cases, they may fluctuate by about 1-3mm. In an example of FIG. 13A, they are die-cut in a condition where W2>W1 and W1>W3 on the assumption that W1 is a reference space setting.

Further, in this example, only one species of size is prepared for the label pieces 14. Although an excess quantity of information to be printed on each of the label pieces 14 occurs depending on a product to be stuck, the excess quantity of information is adjusted by choosing the number of lines to be printed and spacing between characters to be printed. Since the label pieces 14 are of one type, once a release coated paper-attached label 10 is set into a label printer described later, the release coated paper-attached label 10 is not replaced until printing the characters onto the last label piece 14 is finished. That is, it is used up. Of course, it is not limited to such a use example.

On the other hand, as shown in FIG. 13B, on the other side (back side) 12b of the sheet of release coated paper 12, a reference mark 85 which is used as a reference in the print processing is formed by printing.

With respect to the label piece 14, a zone from a rear edge 15b of the label piece 14 to a front edge 15a of the next label piece 14 is prescribed as the reference mark 85. The reference mark 85 is a strip-shaped rod-like mark and printed by using an ink (black ink) having a low transmission factor.

With reference to an edge of the die-cut label piece 14, the reference mark 85 is formed by printing it from the rear edge 15b of the label piece 14 to the front edge 15a of the next label piece 14. Therefore, a leading edge 85b of the reference mark 85 corresponds to the rear edge 15b of the label piece 14 and a trailing end 85a of the reference mark 85 corresponds to the front edge 15a of the next label piece 14. As a result, the reference mark 85 is formed to have a width corresponding to fluctuations in the spacing W.

By using the release coated paper-attached label 10 on which the reference mark 85 has thus been formed by printing, it is possible to avoid any character-printing defect and any character-printing slippage even with fluctuations in the spacing W. This is because a print start position can be determined with respect to a leading end of the label 14, to which the rear edge 85a of the reference mark 85 is aligned.

The reference mark 85 may be printed all over a horizontal width of the sheet of release coated paper 12 as shown in FIG. 13B, or printed intermittently in a strip shape, not shown, further or printed only at its right and left edges in a traveling direction of the sheet of release coated paper 12, as shown in FIG. 18B, corresponding to each of the label pieces 14 shown in FIG. 18A.

On the back side 12b of the sheet of release coated paper 12, besides these reference marks 85, character-printing prohibition marks that correspond to the printed areas 14a can be formed by printing. This will be described below with reference to FIGS. 14A-14C.

The printed area 14a is an area for recording individual identification information as described above (FIG. 14A) while the printed area 14a is set to a print prohibition area in print processing.

Therefore, as shown in FIG. 14B, on the back side of the sheet of release coated paper 12, a print prohibition mark 87 is additionally formed by printing corresponding to the printed area 14a. In this case also, a relative positional relationship is selected so that the leading end (front edge) of the printed area 14a may be aligned with the trailing end (rear edge) of the print prohibition mark 87. A length Wp of the print prohibition mark 87 is related to the spacing W. It is set a little longer than spacing Wmax, which is given as a result of maximum fluctuation. This is done so in order to strictly distinguish between the print prohibition mark 87 and the reference mark 85.

It is to be noted that although in the absence of the printed area 14a, the character-printing areas 14b can be kept to some extent as shown in FIGS. 15A and 15B, in the presence of the printed areas 14a, each of the character-printing areas 14b is limited in space as shown in FIGS. 15A and 15C.

Although in the presence of the printed area 14a, the character-printing area 14b is reduced in space, if utilizing the reference marks 85 as described above, information can be contained accurately in the character-printing area 14b even in such a case.

Although, in the example of FIG. 14B, the print prohibition mark 87 has been printed on the side of the leading end of the printed area 14a, the strip-shaped print prohibition mark 87 can be printed in an area that corresponds to the printed area 14a to be integrated with the reference mark 85 as shown in FIG. 14C.

In this case, in processing on mark read information, which will be described later, there are provided a merit that it is unnecessary to distinguish between the reference mark 85 and the print prohibition mark 87 and a merit that only by providing mark detection means on one side of the label, any character-printing can be carried out only into the character-printing area 14b as in the case of conventional character-printing where only the referenced mark is provided.

Also in character-printing processing on the thus configured label, the label printer 20 shown in FIG. 1 is used. Although it is not detailed, an information-processing section 40 constituted of a CPU performs processing to detect the reference mark 85 etc., control label traveling, and display how much the label is left unprinted.

FIGS. 16A-16D show an example of processing to detect the above-described reference mark 85.

When the release coated paper-attached label 10 starts traveling so that the reference mark 85 may pass over the mark detection means 30, as shown in FIGS. 16A and 16B, a mark signal is obtained corresponding to the reference mark 85. Since this mark signal is an analog one, by binarizing it, a mark detection signal Ma shown in FIG. 16C can be obtained. A pulse width Wa of the mark detection signal Ma corresponds to a length of the reference mark 85 (with respect to the label traveling direction), a leading edge of the mark detection signal Ma corresponds to the leading end 85b of the reference mark 85, and the railing edge of the mark detection signal Ma corresponds to the trailing end 85a of the reference mark 85.

The leading end 85b of the reference mark 85, as described above, corresponds to the rear edge 15b of the label piece 14 and the trailing end 85a of the reference mark 85 corresponds to the front edge 15a of the label piece 14, so that as shown in FIGS. 16A and 16C, a print start pulse (FIG. 16D) is generated at a position Pc preceding the trailing edge of the mark detection signal Ma by as much as a predetermined length ΔWa. In synchronization with this print start pulse, print processing starts.

In such a manner, the print start pulse is generated with reference to the front edge 15a of the label piece 14 corresponding to the trailing end 85a of the reference mark 85. Therefore, it is possible to always start the print processing at the set print start point Pc (FIG. 13A) even in a condition where a die-cut precision is low and the spacing W fluctuates as shown in FIGS. 14A and 15A. As a result thereof, predetermined printing information can be printed on the label 14 without any character print defects.

This holds true also with a case where the printed area 14a has been set on the label piece 14. This will be described below with reference to FIGS. 17A-17E.

When the release coated paper-attached label 10 starts traveling, the print prohibition mark 87 passes over the mark detection means 30 prior to the reference mark 85. When the print prohibition mark 87 passes by, as shown in FIGS. 17A and 17B, a mark signal is obtained corresponding to the print prohibition mark 87. Since this mark signal is an analog one, by binarizing it, a mark detection signal Mb shown in FIG. 17C can be obtained.

Although a pulse width Wb of the mark detection signal Mb corresponds to a length of the print prohibition mark 87 (with respect to the label-traveling direction), inter-label spacing is shorter than the printed area 14a, so that this pulse width Wb is longer than the maximum value Wmax of the pulse width W that corresponds to the reference mark 85. The information control section 40 decides whether this length is longer or shorter and, therefore, determines a mark signal that corresponds to the printed area 14a at a moment when the print prohibition mark 87 passes by.

It is to be noted that a leading edge of the mark detection signal Mb corresponds to a leading end 87b of the print prohibition mark 87 and a railing edge of the mark detection signal Mb corresponds to a trailing end 87a of the print prohibition mark 87. The trailing end 87a of the print prohibition mark 87 corresponds to a front edge 17a of the printed area 14a. Further, when passing the reference mark 85 thereby, a mark signal that corresponds to the reference mark 85 is obtained, and by shaping this signal, the mark detection signal Ma is obtained (FIGS. 17B and 17C).

Accordingly, a zone ΔWc from the first trailing edge of the mark detection signal Mb detected first to the leading edge of the mark detection signal Ma obtained next roughly corresponds to a print prohibition area, in which zone ΔWc, any print processing is prohibited. Therefore, even if any information to be printed is present in the zone ΔWc, this information is ignored and no print processing is carried out (FIG. 17D).

With respect to the railing edge of the mark detection signal Ma corresponding to the reference mark 85, a print start pulse (FIG. 17E) is generated, and in synchronization with the print start pulse, print processing is started as described above.

It is to be noted that each of the above embodiments are just one example of the present invention and so can be modified and changed variously without departing from a gist of the present invention.

### Industrial Applicability

The present invention can be applied to a label printer which is used in distribution industries, product manufacturers, supermarkets, etc.

## Claims

1. A release coated paper-attached label, **characterized in that** the label comprises:
a label piece stuck on one side of a sheet of release coated paper;
a barcode which indicates information related to said label piece and which is printed on the other side of said sheet of release coated paper; and
a mark which indicates information related to a print quality and which is printed on the same printing side as that prints said barcode.

2. The release coated paper-attached label according to claim 1, **characterized in that** said mark is an identification mark, this identification mark including a plurality of identical marks that are printed at positions that precede said barcode with them being sequentially shifted with respect to a width direction of said sheet of release coated paper.

3. The release coated paper-attached label according to claim 2, **characterized in that** the marks of three through six that constitutes said identification mark are used.

4. The release coated paper-attached label according to claim 1, **characterized in that** said mark is a density information mark, said density information mark being utilized as density adjustment information in a reading sensor.

5. The release coated paper-attached label according to claim 4, **characterized in that** said density information mark is a mark that is printed at a reference density.

6. A label printer, **characterized in that** the printer comprises:
a reading sensor for reading a barcode printed on one side of a sheet of release coated paper for a label and a mark which indicates information related to a print quality; and
a control section for conducting print control and performing information processing related to the print quality based on information of said barcode and information of said mark which have been read.

7. The label printer according to claim 6, **characterized in that:**
when said mark is an identification mark, this identification mark is configured by a plurality of identical marks;
said reading sensor is constituted of a reading sensor having a single-element configuration for reading each of said identification marks; and
said control section performs information processing to combine pieces of mark information from the respective read identification marks and check them against saved mark information.

8. The label printer according to claim 7, **characterized in that** said identification marks are sequentially shifted with constant spacing between them with respect to a width direction of the sheet of release coated paper.

9. The label printer according to claim 6, **characterized in that** if in agreement of checking mark information contained in said barcode against read mark information, information related to said mark information is displayed on a display section.

10. The label printer according to claim 6, **characterized in that** if said mark is a density information mark, said control section adjusts sensor sensitivity of said reading sensor based on density adjustment information for said reading sensor created by checking density information at a point in time when this density information mark has been read and a reference density against each other.

11. The label printer according to claim 10, **characterized in that** said sensor sensitivity is adjusted either by adjusting a level of voltage which is applied to said reading sensor or by amplifying a density detection level of the read density information.
